# EUROPÄISCHE PATENTSCHRIFT

(11) **EP 3 072 663 B1**
(45) Veröffentlichungstag und Bekanntmachung des Hinweises auf die Patenterteilung: **27.02.2019**
(21) Anmeldenummer: 16153188.4
(22) Anmeldetag: 28.01.2016
(51) Int. Cl.: B29C 45/14, B29C 45/16, B29L 9/00, B29K 675/00

(54) **SPRITZGUSSTEIL MIT EINEM BASISTEIL UND EINEM DARAN BEFESTIGTEN POLSTERNDEN FORMTEIL UND VERFAHREN ZU SEINER HERSTELLUNG**
INJECTION MOULDED PART WITH A BASE UNIT AND A MOULDED PART ATTACHED THERETO AND METHOD FOR ITS PRODUCTION
PIECE COULEE PAR INJECTION COMPRENANT UNE PARTIE DE BASE ET UNE PIECE DE REMBOURRAGE FIXEE DESSUS ET SON PROCEDE DE PRODUCTION

(30) Priorität: 27.03.2015 DE 102015205645
(43) Veröffentlichungstag der Anmeldung: 28.09.2016
(73) Patentinhaber: TechnoGel GmbH, 37115 Duderstadt (DE)
(72) Erfinder: Ausmeier, Matthias, 37520 Osterode am Harz (DE); Dreyling, Hans-Hermann, 37115 Duderstadt (DE); Klingebiel, Frank Stefan, 37115 Duderstadt (DE); Ballüer, Daniel, 37339 Teistungen (DE); Klingebiel, Jan, 37115 Duderstadt (DE)
(74) Vertreter: Lins, Edgar

(56) Entgegenhaltungen:
- EP-A1- 0 552 040
- WO-A1-2014/055596
- DE-A1- 3 712 882
- DE-A1-102006 013 857
- US-A1- 2003 169 236
- US-A1- 2009 287 283

## Beschreibung

Die Erfindung betrifft ein Spritzgussteil, gebildet aus einem im Spritzgussverfahren hergestellten Basisteil und einem daran befestigten polsternden Formteil, wobei das polsternde Formteil mit einem Gelkörper gebildet ist, der auf seiner Begrenzungsfläche mit einem härteren, jedoch flexiblen und elastisch verformbaren, eine Hartkomponente bildenden Material vollständig abgedeckt ist, das einen seitlich über die Weichkomponente herausstehenden umlaufenden flanschartigen Rand ausbildet, wobei das polsternde Material über die Hartkomponente mit dem Basisteil verbunden ist, indem die Hartkomponente mit dem Material des Basisteils beim Spritzgießvorgang für das Basisteil umspritzt wird.

Die Materialauswahl für Spritzgussteile erfolgt unter zahlreichen Aspekten, wozu insbesondere die gewünschte Stabilität, Festigkeit, Elastizität und Flexibilität des herzustellenden Spritzgussteils gehören. Unter den jeweiligen Aspekten ausgewählte Materialien können aber nicht alle Anforderungen erfüllen, insbesondere wenn das Spritzgussteil zur Anlage an einem Körper vorgesehen ist. Das Material des Spritzgussteils kann dann aufgrund von Relativbewegungen zu Scheuerstellen und ähnlichen Beschädigungen führen. Insbesondere bei der Anlage an einem lebenden menschlichen oder tierischen Körper können dabei unangenehme Druckstellen, Schürfwunden oder gar Einschnitte verursacht werden. Es ist daher bekannt, das Spritzgussteil mit einem polsternden Formteil zu versehen, das aus einem weicheren Material besteht. Hierfür eignet sich insbesondere ein Formteil aus einem Gel. Da das weiche Formteil regelmäßig den Spritzgussdrücken nicht formstabil standhalten kann, wird es üblicherweise separat hergestellt und nachträglich auf das im Spritzgussverfahren hergestellte Spritzgussteil aufgebracht, beispielsweise aufgeklebt. Dieses Verfahren ist umständlich und sorgt für eine Verteuerung des Spritzgussteils.

Durch DE 37 12 882 A1 ist ein Auskleidungsformteil für ein Kraftfahrzeug in Form eines Teppichstücks bekannt. Dabei wird in üblicher Weise eine Teppichlage aus einem Flor mit einer Trägerlage aus einem stabilen Elastomer hergestellt. Auf der Unterseite des Elastomers kann über eine Vlieslage ein Weichschaumrücken angeformt sein. Das Auskleidungsformteil wird umlaufend durch ein Kunststoffteil abgeschlossen, das als Randteil mit Hilfe einer entsprechenden Form hergestellt wird. Bedingt durch die Form des Auskleidungsformteils muss sich die Form für die Herstellung des Randteils entlang des Randes des Auskleidungsformteils umlaufend erstrecken, sodass sehr komplizierte Formen benötigt werden, die nur für eine absolute Massenproduktion wirtschaftlich sein können. Der Weichschaumrücken muss eine erhebliche Stabilität aufweisen, da er die Auflage auf dem Fahrzeugboden bildet und den durch die Benutzung entstehenden Scherkräften widerstehen können muss. Der Weichschaumrücken kann in einer gesonderten Form an die Elastomerschicht über die Vliesschicht angeformt werden, wobei dieser Amformvorgang allerdings funktional und zeitlich unabhängig von der Herstellung des Rand-Kunststoffteils ist. Das sich für ein weiches Formteil ergebende Problem, dass es einem Spritzgießdruck für die Herstellung des Basisteils nicht standhalten kann, ergibt sich bei der Herstellung der Auskleidungsformteile nicht, weil ein weiches Formteil der beschriebenen Art nicht durch einen Weichschaum gebildet ist und weil das weiche Formteil nicht in der Spritzgussform für die Herstellung des Rand-Kunststoffteils angeordnet wird, sodass es dem Spritzgussdruck auch gar nicht ausgesetzt sein kann.

Der vorliegenden Erfindung liegt die Aufgabe zugrunde, ein Spritzgussteil der genannten Art zu ermöglichen, bei dem ein weiches polsterndes Formteil ohne separaten Aufwand mit dem Basisteil verbunden ist, wobei das polsternde Formteil zur polsternden Anlage an einem lebenden menschlichen oder tierischen Körper geeignet sein soll.

Zur Lösung dieser Aufgabe ist ein Spritzgussteil der eingangs erwähnten Art erfindungsgemäß dadurch gekennzeichnet, dass die Weichkomponente durch einen Gelkörper gebildet ist und außerhalb der von der Hartkomponente abgedeckten Begrenzungsfläche vollständig durch eine Abdeckfolie umschlossen ist, durch die die Weichkomponente bei Belastung in einem begrenzten Volumen gehalten wird.

Das erfindungsgemäße Spritzgussteil weist somit ein polsterndes Formteil auf, das zweiteilig ausgebildet ist. Die eigentliche Polsterwirkung wird durch eine Weichkomponente bewirkt, die durch einen weichen gegossenen Gelkörper gebildet ist. Zum Basisteil hin ist diese Weichkomponente vollständig abgedeckt durch eine Hartkomponente des polsternden Formteils. Die Hartkomponente weist eine größere Härte auf als die Weichkomponente, ist jedoch ebenfalls flexibel und elastisch verformbar. Die Hartkomponente ist vorzugsweise aus einem Hartgel gebildet, das in seiner Struktur ähnlich ist wie das Gel der Weichkomponente, sodass sich die Weichkomponente und die Hartkomponente im flüssigen Zustand gut miteinander materialschlüssig verbinden, ohne dass ein Klebstoff benötigt wird. Die Hartkomponente überragt den Gelkörper seitlich mit einem umlaufenden flanschartigen Rand, mit dem in der Spritzgussform die benötigte Abgrenzung des weichen gegossenen Gelkörpers gegenüber dem eingespritzten Material des Basisteils erfolgt. Der umlaufende flanschartige Rand ermöglicht eine vollständige Abdichtung des durch den gegossenen Gelkörper ausgefüllten Raums, der durch eine Negativform im Spritzwerkzeug gebildet wird. Durch die aufgebrachte Hartkomponente des polsternden Formteils ist dieses in der Lage, dem anschließenden Spritzdruck für das Basisteil formstabil zu widerstehen. Dabei wird das Material der Hartkomponente im Bereich des abdichtenden umlaufenden Randes stark komprimiert, beispielsweise auf eine Dicke von 30 % der Ausgangsdicke des Materials. Wenn also in einem bevorzugten Ausführungsbeispiel die Materialstäke des umlaufenden flanschartigen Rands 1 mm beträgt, wird dieser Rand zwischen zwei Formteilen eingeklemmt und auf beispielsweise 0,3 mm durch den Schließdruck der Spritzgießform zusammengedrückt. Das Material der Hartkomponente muss dabei so ausgewählt werden, dass es dieser elastischen Verformung und dem Spritzdruck standhalten kann. Dabei kann es zweckmäßig sein, wenn die Hartkomponente aus einem gefüllten Hartgel besteht, insbesondere einem mit einem Metalloxid oder einem Metalloidoxid, insbesondere Kieselsäure, gefüllten Hartgel, insbesondere einem gefüllten Polyurethangel, wie es durch EP 1 125 975 B1 bekannt ist. In einem bevorzugten Ausführungsbeispiel hat das Hartgel eine Härte 40 Shore A.

Bevorzugte Materialkombinationen für die Weichkomponente und die Hartkomponente sind PU-Softgel mit PU-Hartgel sowie Silikon-Softgel mit Silikon-Hartgel. Möglich sind aber auch andere Kombinationen, beispielweise ein PU-Schaum als Weichkomponente mit einem PU-Hartgel als Hartkomponente.

Insbesondere bei der Verwendung eines Softgels aus Polyurethan (PU), das zur Klebrigkeit neigt, ist es vorteilhaft, wenn die Weichkomponente durch eine Abdeckfolie außerhalb der von der Hartkomponente abgedeckten Begrenzungsfläche vollständig umschlossen ist. Die Abdeckfolie ist erfindungsgemäß zweckmäßigerweise eine Hochleistungs-TPU-Folie, wie sie beispielsweise unter den Marken "Platilon" oder "Dureflex" vertrieben werden.

Die Folie verbindet sich bei dem Aufbringen des Materials der Hartkomponente mit der Hartkomponente, sodass sie zusätzlich die Funktion erfüllt, die Weichkomponente auch bei Belastung in einem begrenzten Volumen zu halten, sodass die Weichkomponente nach einer Belastung in die Ausgangsform zurückkehrt. Hierfür ist es zweckmäßig, die Abdeckfolie beispielsweise durch Tiefziehen vorzuverformen.

Da auch das Hartgel der Hartkomponente noch klebrig sein kann, ist es zweckmäßig, wenn die von der Weichkomponente abgewandte Oberfläche der Hartkomponente ebenfalls mit einer Folie abgedeckt ist. Diese Folie muss mit dem Spritzgussmaterial verträglich sein. Insbesondere kann die Abdeckfolie der Hartkomponente ebenfalls eine TPU-Folie sein, die sich von der TPU-Folie der Weichkomponente unterscheiden kann. Als Spritzgussmaterial für das Basisteil kann ebenfalls ein TPU Verwendung finden. Allerdings sind auch andere Materialien, wie Silikon, Polycarbonat usw., möglich.

Die Herstellung des erfindungsgemäßen Spritzgussteils mit dem gegossenen polsternden Formteil erfolgt dadurch, dass zunächst die Weichkomponente des polsternden Formteils in einer geeigneten Form gegossen wird, wobei anschließend die Hartkomponente aufgebracht wird. Das Formteil wird mit seiner Weichkomponente in eine entsprechende Negativform eingebracht, die ein erstes Formstück einer Spritzgussform bildet, sodass der umlaufende Rand der Hartkomponente auf einer die Negativform abschließenden Oberfläche abdichtend aufliegt, wenn die Spritzgussform durch ein zweites Formstück geschlossen wird und den umlaufenden Rand mit dem Schließdruck der Spritzgießform einklemmt. Dann wird der Spritzgießvorgang für das Basisteil durchgeführt, wobei die Weichkomponente in der Negativform durch die Hartkomponente gegenüber dem eingespritzten Material des Basisteils abgeschirmt und die Hartkomponente mit dem Material des Basisteils umspritzt wird.

Bei dem erfindungsgemäßen Spritzgussteil findet somit die Verbindung zwischen dem Basisteil und dem polsternden Formteil an der Hartkomponente statt, während die Weichkomponente von dem Material des Basisteils durch die Abdichtung mittels der Hartkomponente abgeschirmt bleibt. Für einige Anwendungsfälle kann es vorteilhaft sein, wenn die Verbindung zwischen der Hartkomponente und dem Material des Basisteils ausschließlich im Bereich der schmalen freien Kante der Hartkomponente des polsternden Formteils erfolgt, wenn also die von der Weichkomponente abgewandte Fläche der Hartkomponente frei bleibt.

Zum Aufbringen der die Weichkomponente abdeckenden Folie wird diese zunächst in die Gießform für die Weichkomponente eingeformt, beispielweise durch Tiefziehen, sodass das Eingießen der Weichkomponente in die mit der Folie ausgekleidete Gießform erfolgt. Anschließend wird die Hartkomponente aufgebracht, vorzugsweise ebenfalls durch einen Gießvorgang und vorzugsweise noch während sich die Weichkomponente noch in ihrer Gießform befindet. Die Vernetzung der beiden Komponenten kann beispielsweise bei Polyurethan reaktiv erfolgen. Anschließend wird das polsternde Formteil in die Negativform der Spritzgussform eingelegt und der Spritzgießvorgang für das Basisteil durchgeführt.

In einer Weiterbildung des erfindungsgemäßen Verfahrens wird vor dem Durchführen des Spritzgießvorgangs die von der Weichkomponente abgewandte Fläche der Hartkomponente noch mit einer Abdeckfolie abgedeckt. Dies ist insbesondere zweckmäßig, wenn die Verbindung zwischen dem polsternden Formteil und dem Basisteil, beispielsweise ausschließlich im Bereich der schmalen freien Kante der Hartkomponente des polsternden Formteils, so erfolgt, dass die von der Weichkomponente abgewandte Fläche der Hartkomponente nicht von dem Material des Basisteils abgedeckt wird und daher frei bleibt. Die Folie vermeidet dann eine möglicherweise unangenehme klebrige Oberfläche des Spritzgussteils im Bereich der Hartkomponente des polsternden Formteils. Das Aufbringen der Folie erfolgt vorzugsweise vor dem Einlegen in die Spritzgießform, insbesondere noch in der Gießform für die Weichkomponente nach dem Aufbringen, vorzugsweise Aufgießen, der Hartkomponente.

Die Erfindung wird im Folgenden anhand von in der Zeichnung dargestellten Ausführungsbeispielen näher erläutert.

Es zeigen:
- Figur 1: eine Seitenansicht und eine Draufsicht eines polsternden Formteils aus einer Weichkomponente und einer Hartkomponente;
- Figur 2: eine Seitenansicht und eine Draufsicht eines fertigen Spritzgussteils, bei dem das polsternde Formteil mit dem Material eines Basisteils verbunden ist;
- Figur 3: eine Draufsicht auf ein erstes Formstück (Unterteil) einer Spritzgussform;
- Figur 4: einen Schnitt durch die Spritzgussform aus erstem Formstück und zweitem Formstück (noch nicht geschlossen) mit eingelegtem polsternden Formteil, dessen Hartkomponente von dem Material des Basisteils umspritzt wird.

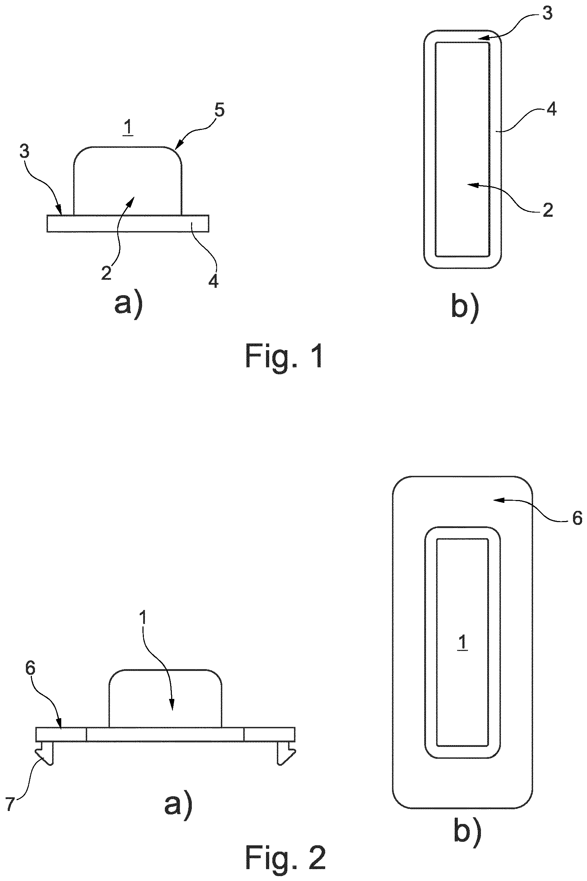

Das in Figur 1 dargestellte Ausführungsbeispiel eines polsternden Formteils 1 besteht aus einer Weichkomponente 2, die aus einem Polyurethan-Softgel gebildet sein kann und einer Hartkomponente 3, die eine Seite - hier eine Unterseite - der Weichkomponente vollständig abdeckt und über die Kontur der Weichkomponente mit einem umlaufenden, flanschartigen Rand 4 hinaussteht. Die Weichkomponente 2 ist in dem dargestellten Ausführungsbeispiel auf allen Seiten, die nicht von der Hartkomponente 3 abgedeckt sind, mit einer vorverformten Folie 5 abgedeckt. Die Folie 5 ist vorzugsweise auf dem umlaufenden flanschartigen Rand 4 der Hartkomponente 3 mit dieser verbunden, sodass die Folie 5 mit der Hartkomponente 3 einen von der Weichkomponente 2 ausgefüllten Raum einschließt.

Die Draufsicht in Figur 1b) verdeutlicht, dass die Weichkomponente 2 und die Hartkomponente 3 eine langgestreckte Form aufweisen können. Ersichtlich sind alle möglichen Formgebungen für die Weichkomponente 2 und die Hartkomponente 3 möglich, solange die Hartkomponente 3 die Weichkomponente 2 mit einem umlaufenden flanschartigen Rand 4 umgeben kann, dessen Funktion unten noch näher erläutert wird.

Figur 2 zeigt eine Seitenansicht und eine Draufsicht eines Spritzgussteils, das aus dem polsternden Formteil 1 und einem Basisteil 6 besteht. Das Basisteil 6 ist hier lediglich als Ausführungsbeispiel in im Wesentlichen rechteckiger, langgestreckter Form dargestellt, kann jedoch jede beliebige Ausbildung aufweisen. Insbesondere muss das Basisteil 6 nicht zwingend flächig ausgebildet sein. Es kann auch kompliziertere Formen aufweisen, wie beispielsweise eine Brillenform für eine Augenmaske. Das Basisteil 6 kann ferner rahmenförmig ausgebildet sein, wobei das polsternde Formteil 1 einen Innenrand und/oder Außenrand des Rahmenteils abpolstern kann. In dem in Figur 2 dargestellten Ausführungsbeispiel weist das Basisteil angespritzte Rasthaken 7 auf, mit denen das Basisteil 6 und das mit ihm verbundene polsternde Formteil 1 in eine Aufnahme einschnappbar ist.

Das Basisteil 6 wird im Spritzgussverfahren hergestellt, wobei das polsternde Formteil 1 beim Spritzgussvorgang mit dem Basisteil 6 verbunden wird.

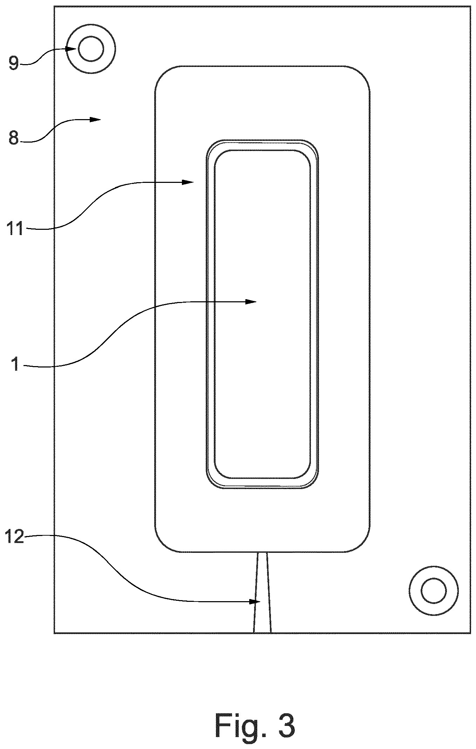

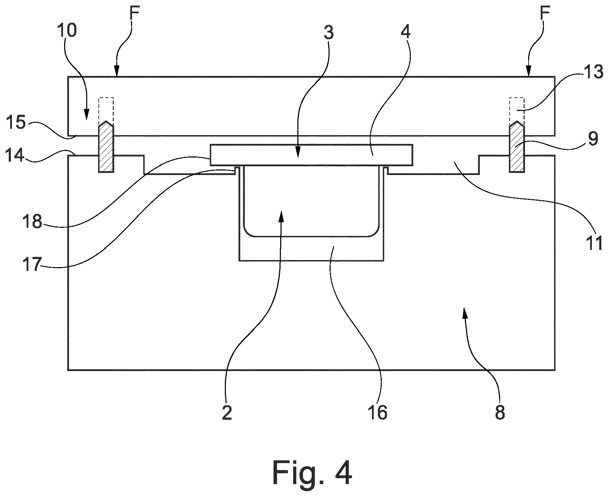

Figur 3 zeigt eine Draufsicht auf ein erstes Formstück 8 eines Spritzgusswerkzeugs. Das erste Formstück 8 bildet ein rechteckiges Formunterteil, das an zwei diagonal gegenüberliegenden Ecken mit Führungsbolzen 9 zur exakten Positionierung zu einem zweiten Formstück 10 (Formoberteil; Figur 4) versehen ist. In das in Figur 3 dargestellte erste Formstück 8 ist eine Spritzgusskavität 11 eingeformt, mit der das Basisteil 6 geformt wird. Zentral in der Spritzgusskavität 11 befindet sich das eingelegte polsternde Formteil 1, das vorzugsweise als gegossenes Formteil vorab hergestellt worden ist.

Figur 3 lässt ferner einen Angusskanal 12 erkennen, über den die Spritzgusskavität 11 beim Spritzgießvorgang mit dem Material des Basisteils 6 gefüllt wird.

Figur 4 verdeutlicht das Zusammenspiel des ersten Formstücks 8 mit dem zweiten Formstück 10 für den Spritzgießvorgang. Die Führungsbolzen 9 des ersten Formstücks 8 werden in entsprechenden Führungslöchern 13 des zweiten Formstücks 10 geführt, sodass die Form dadurch geschlossen werden kann, dass das zweite Formstück 10 nach unten gegen das erste Formstück 8 gedrückt wird, bis plane gegenüberliegende Flächen 14, 15 der beiden Formstücke 8, 10 aufeinander gepresst werden. Figur 4 lässt erkennen, dass dadurch die Spritzgusskavität 11 einen geschlossenen Raum bildet, in den das Material des Basisteils 6 eingespritzt wird. Dabei wird auch deutlich, dass das Andrücken des zweiten Formstücks 10 an das erste Formstück 8 bis zum vollständigen Schließen der Spritzgussform bedingt, dass die Hartkomponente 3 elastisch zusammengedrückt wird. Die Weichkomponente 2 ragt dabei in eine entsprechende Negativform 16 des ersten Formstücks 8, die an der Oberseite zum umlaufenden flanschartigen Rand 4 hin mit einem ringförmigen Vorsprung 17 abgeschlossen ist, auf den der flanschartige Rand 4 der Hartkomponente 3 aufgepresst wird, sodass die Negativform mit der darin befindlichen Weichkomponente beim Spritzgießvorgang sicher abgedichtet ist. Die Weichkomponente 2 wird daher durch die Hartkomponente 3 von dem Materialdruck des Materials des Basisteils 6 beim Spritzgießvorgang vollständig abgeschirmt.

Die Pfeile F verdeutlichen den Schließdruck des Spritzgießwerkzeugs, mit dem das zweite Formstück 10 aus der in Figur 4 noch nicht geschlossenen Stellung gegen das erste Formstück 8 gedrückt wird, bis die planen Flächen 14, 15 mit Druck aufeinanderliegen, wodurch das Werkzeug geschlossen ist.

Die erfindungsgemäße Ausbildung des polsternden Formteils 1 aus der Weichkomponente 2 und der Hartkomponente 3 ermöglicht somit, dass das polsternde Formteil 1 in das Material des Basisteils 6 in einem Spritzgießvorgang eingebettet werden kann, ohne dass der Spritzdruck die Weichkomponente 2 unbrauchbar macht. Die Hartkomponente 3 schirmt die Weichkomponente 2 von dem Spritzdruck ab und dient mit seinem umlaufenden flanschartigen Rand 4 der Abdichtung der Negativform 16 des Spritzgusswerkzeugs, in der die Weichkomponente 2 aufgenommen wird.

Bei einer Ausführungsform des Spritzgießwerkzeugs gemäß Figur 4 liegt ersichtlich die plane Fläche 15 des zweiten Formstücks 10 flächig an der flächigen Hartkomponente 3 an, sodass diese mit dem Material des Basisteils 6 im Wesentlichen im Bereich einer umlaufenden schmalen Kante 18 verbunden wird. Darüber hinaus kann die Spritzgusskavität 11 mit dem ringförmigen Vorsprung 17 so ausgebildet sein, dass der flanschartige Rand 4 teilweise auch an seiner Oberseite (die in Figur 4 nach unten zeigt) ringförmig umspritzt wird, sodass der umlaufende flanschartige Rand 4 auf zwei senkrecht zueinander stehenden Flächen in das Material des Basisteils 6 eingespritzt wird.

Selbstverständlich ist es weiterhin möglich, die Fläche 15 des zweiten Formstücks 10 mit Ausnehmungen zu versehen, um Material des Basisteils 6 auch auf einer dritten Seite der Hartkomponente 3 eintreten zu lassen, sodass die Hartkomponente 3 auch auf drei Seiten umspritzt sein kann. Wichtig ist dabei lediglich, dass der Schließdruck F des Werkzeugs den flanschartigen Rand 4 der Hartkomponente 3 abdichtend gegen das erste Formstück 8 drückt, um die Abdichtung der Negativform 16 mit der darin befindlichen Weichkomponente 2 während des Spritzgussvorgangs sicherzustellen.

## Patentansprüche

1. Spritzgussteil gebildet aus einem im Spritzgussverfahren hergestellten Basisteil (6) und einem daran befestigten polsternden Formteil (1), wobei das polsternde Formteil (1) mit einem Gelkörper gebildet ist, der auf seiner Begrenzungsfläche mit einem härteren, jedoch flexiblen und elastisch verformbaren, eine Hartkomponente (3) bildenden Material vollständig abgedeckt ist, das einen seitlich über die Weichkomponente (2) herausstehenden umlaufenden flanschartigen Rand (4) ausbildet, wobei das polsternde Material (1) über die Hartkomponente (3) mit dem Basisteil (6) verbunden ist, indem die Hartkomponente (3) mit dem Material des Basisteils (6) beim Spritzgießvorgang für das Basisteil umspritzt wird,
wobei
die Weichkomponente (2) durch einen Gelkörper gebildet ist und außerhalb der von der Hartkomponente (3) abgedeckten Begrenzungsfläche vollständig durch eine Abdeckfolie (5) umschlossen ist, durch die die Weichkomponente (2) bei Belastung in einem begrenzten Volumen gehalten wird.

2. Spritzgussteil nach Anspruch 1 **dadurch gekennzeichnet, dass** die Hartkomponente (3) flächig mit einer konstanten Materialstärke ausgebildet ist.

3. Spritzgussteil nach einem der Ansprüche 1 oder 2, **dadurch gekennzeichnet, dass** die Hartkomponente (3) als Gel ausgebildet ist.

4. Spritzgussteil nach Anspruch 3, **dadurch gekennzeichnet, dass** die Hartkomponente (3) ein mit pyrogener Kieselsäure gefülltes Polyurethangel ist.

5. Spritzgussteil nach einem der Ansprüche 1 bis 4, **dadurch gekennzeichnet, dass** die von der Weichkomponente (2) abgewandte Fläche der Hartkomponente (3) mit einer Folie abgedeckt ist.

6. Verfahren zur Herstellung eines Spritzgussteils mit einem Basisteil (6) und einem daran befestigten polsternden Formteil (1), wobei das polsternde Formteil (1) mit einem Gelkörper gebildet ist, der auf seiner Begrenzungsfläche mit einem härteren, jedoch flexiblen und elastisch verformbaren, eine Hartkomponente (3) bildenden Material vollständig abgedeckt ist, das einen seitlich über die Weichkomponente (2) herausstehenden umlaufenden flanschartigen Rand (4) ausbildet, wobei das polsternde Material (1) über die Hartkomponente (3) mit dem Basisteil (6) verbunden ist, indem die Hartkomponente (3) mit dem Material des Basisteils (6) beim Spritzgießvorgang für das Basisteil umspritzt wird,
mit den Verfahrensschritten
a) Einbringen des polsternden Formteils (1) mit der Weichkomponente (2) in eine entsprechende Negativform (16), die sich in einem ersten Formstück (8) einer Spritzgussform befindet, sodass der umlaufende Rand (4) der Hartkomponente (3) auf einer die Negativform (16) abschließenden Oberfläche abdichtend aufliegt, wenn die Spritzgussform durch ein zweites Formstück (10) geschlossen wird,
b) Durchführung eines Spritzgießvorgangs für das Basisteil (6), wobei die Weichkomponente (2) in der Negativform (16) durch die Hartkomponente (3) gegenüber dem eingespritzten Material des Basisteils (6) abgeschirmt und die Hartkomponente (3) mit dem Material des Basisteils (6) umspritzt wird.

7. Verfahren nach Anspruch 6, **dadurch gekennzeichnet, dass** die Weichkomponente (2) in eine mit einer Folie (5) ausgekleidete Gießform gegossen wird und dass die Folie beim anschließenden Aufbringen der Hartkomponente (3) mit dieser verbunden wird.

8. Verfahren nach Anspruch 6 oder 7, **dadurch gekennzeichnet, dass** vor der Durchführung des Spritzgießvorgangs auf die freie, von der Weichkomponente (2) abgewandte Fläche der Hartkomponente (3) eine Abdeckfolie aufgelegt wird.

## Claims

1. Injection molded part, formed of a base part (6), produced in an injection molding process, and a thereto fastened cushioning shaped part (1), wherein the cushioning shaped part (1) is formed with a gel body which is completely covered on its boundary surface with a harder, yet flexible and elastically deformable material, forming a hard component (3), which material forms a circumferential flange-like rim (4) protruding laterally beyond the soft component (2), wherein the cushioning material (1) is connected to the base part (6) via the hard component (3), by virtue of the hard component (3) being injection coated with the material of the base part (6) in the course of the injection molding operation for the base part, wherein the soft component (2) is formed by a gel body and is completely enclosed by a cover film (5) outside the boundary surface covered by the hard component (3), whereby the soft component (2) is kept in a limited volume during a load.

2. Injection molded part according to Claim 1, **characterized in that** the hard component (3) is of planar configuration, with a constant material thickness.

3. Injection molded part according to Claim 1 or 2, **characterized in that** the hard component (3) is configured as a gel.

4. Injection molded part according to Claim 3, **characterized in that** the hard component (3) is a polyurethane gel filled with pyrogenic silicic acid.

5. Injection molded part according to one of Claims 1 to 4, **characterized in that** that face of the hard component (3) which is facing away from the soft component (2) is covered with a film.

6. Method for producing an injection molded part formed of a base part (6)and a cushioning shaped part (1) fastened thereto, wherein the cushioning shaped part (1) is formed by a gel body which is completely covered on its boundary surface with a harder, yet flexible and elastically deformable material, forming a hard component (3), which material forms a circumferential flange-like rim (4) protruding laterally beyond the soft component (2), wherein the cushioning material (1) is connected to the base part (6) via the hard component (3), by virtue of the hard component (3) being injection coated with the material of the base part (6) in the course of the injection molding operation for the base part, comprising the method steps:
a) Introduction of the cushioning shaped part (1) with the soft component (2) into a corresponding negative form (16) located in a first mold piece (8) of an injection mold, so that, when the injection mold is closed by a second mold piece (10), the circumferential rim (4) of the hard component (3) rests sealingly on a surface which closes off the negative form (16).
b) Performance of an injection molding operation for the base part (6), wherein the soft component (2) in the negative form (16) is shielded by the hard component (3) against the injected material of the base part (6) and the hard component (3) is injection coated with the material of the base part (6).

7. Method according to Claim 6, **characterized in that** the soft component (2) is cast into a casting mold lined with a film (5), and **in that** the film, upon subsequent application of the hard component (3), is connected thereto.

8. Method according to Claim 6 or 7, **characterized in that**, prior to the performance of the injection molding operation, a cover film is applied to that free face of the hard component (3) which is facing away from the soft component (2).

## Revendications

1. Pièce coulée par injection formée d'une partie de base (6) réalisée par un procédé de coulée par injection et par une partie moulée (1) de rembourrage fixée à celle-ci, la partie moulée de rembourrage (1) étant formée avec un corps de gel qui est complètement recouvert sur sa surface de délimitation par un matériau plus dur, mais flexible et élastiquement déformable et constituant un composant dur (3), ledit matériau formant un bord (4) en forme de bride périphérique dépassant latéralement au-delà du composant souple (2), le matériau de rembourrage (1) étant relié à la partie de base (6) par le composant dur (3) du fait que le composant dur (3) est surmoulé avec le matériau de la partie de base (6) lors de l'opération de coulée par injection pour la partie de base,
dans laquelle
le composant souple (2) est formé par un corps de gel et est complètement entouré par une feuille de recouvrement (5) à l'extérieur de la surface de délimitation recouverte par le composant dur (3), feuille par laquelle le composant souple (2) est retenu dans un volume délimité, en cas de charge.

2. Pièce coulée par injection selon la revendication 1,
**caractérisée en ce que**
le composant dur (3) est réalisé de façon surfacique avec une épaisseur de matériau constante.

3. Pièce coulée par injection selon l'une des revendications 1 ou 2,
**caractérisée en ce que**
le composant dur (3) est réalisé sous forme de gel.

4. Pièce coulée par injection selon la revendication 3,
**caractérisée en ce que**
le composant dur (3) est un gel de polyuréthane rempli de silice pyrogène.

5. Pièce coulée par injection selon l'une des revendications 1 à 4,
**caractérisée en ce que**
la surface du composant dur (3) détournée du composant souple (2) est recouverte par une feuille.

6. Procédé pour réaliser une pièce coulée par injection comportant une partie de base (6) et une partie moulée (1) de rembourrage fixée à celle-ci, la partie moulée de rembourrage (1) étant formée avec un corps de gel qui est complètement recouvert sur sa surface de délimitation par un matériau plus dur, mais flexible et élastiquement déformable et constituant un composant dur (3), ledit matériau formant un bord (4) en forme de bride périphérique dépassant latéralement au-delà du composant souple (2), le matériau de rembourrage (1) étant relié à la partie de base (6) par le composant dur (3) du fait que le composant dur (3) est surmoulé avec le matériau de la partie de base (6) lors de l'opération de coulée par injection pour la partie de base,
comprenant les étapes consistant à :
a) introduire la partie moulée de rembourrage (1) avec le composant souple (2) dans un moule négatif correspondant (16) qui se situe dans une première partie de moulage (8) d'un moule de coulée par injection, de sorte que le bord périphérique (4) du composant dur (3) repose avec étanchement sur une surface qui termine le moule négatif (16) lorsque le moule de coulée par injection est refermé par une seconde partie de moulage (10),
b) mettre en oeuvre une opération de coulée par injection pour la partie de base (6), le composant souple (2) dans le moule négatif (16) étant protégé vis-à-vis du matériau injecté de la partie de base (6) par le composant dur (3), et le composant dur (3) étant surmoulé avec le matériau de la partie de base (6).

7. Procédé selon la revendication 6,
**caractérisé en ce que**
le composant souple (2) est coulé dans un moule de coulée revêtu d'une feuille (5), et **en ce que**
lorsque le composant dur (3) est ensuite appliqué, la feuille est reliée à celui-ci.

8. Procédé selon la revendication 6 ou 7,
**caractérisé en ce que**
avant de mettre en oeuvre l'opération de coulée par injection, une feuille de recouvrement est posée sur la surface libre du composant dur (3) détournée du composant souple.
